# EUROPEAN PATENT SPECIFICATION

(11) **EP 2 971 874 B1**
(45) Date of publication and mention of the grant of the patent: **30.10.2019**
(21) Application number: 14711378.1
(22) Date of filing: 01.03.2014
(51) Int. Cl.: F16J 15/08

(54) **SMALL ELASTIC SEALING FEATURE INSIDE OF MAIN COMBUSTION SEALING EMBOSSMENT**
KLEINE ELASTISCHE DICHTUNG IN EINER ABDICHTUNGSPRÄGUNG EINER HAUPTBRENNKAMMER
PETIT ÉLÉMENT D'ÉTANCHÉITÉ ÉLASTIQUE À L'INTÉRIEUR D'UN BOSSELAGE D'ÉTANCHÉITÉ DE COMBUSTION PRINCIPAL

(30) Priority: 14.03.2013 US 201313804853
(43) Date of publication of application: 20.01.2016
(73) Proprietor: Tenneco Inc., Lake Forest, IL 60045 (US)
(72) Inventor: OKANO, Takashi, Commerce Township, MI 48390 (US); HONKALA, Steven, Wolverine Lake, MI 48390 (US)
(74) Representative: Becker Kurig Straus
(86) International application number: PCT/US2014/019712
(87) International publication number: WO 2014/158732

(56) References cited:
- EP-A1- 0 697 550
- EP-A1- 0 982 517
- EP-A1- 2 325 529
- WO-A1-2012/106436
- WO-A2-2009/102921
- WO-A2-2010/151616
- JP-A- 2009 062 934
- US-A- 5 626 348
- US-A- 5 690 343
- US-A1- 2001 017 446
- US-A1- 2005 206 091
- US-A1- 2006 131 818
- US-A1- 2009 066 036
- US-A1- 2009 166 985
- US-A1- 2010 109 255

## Description

### BACKGROUND OF THE INVENTION

### 1. Field of the Invention

The subject invention relates generally to multi-layered gasket assemblies for use in internal combustion engines.

### 2. Related Art

Multi-layered gasket assemblies are traditionally used to form a seal between two mating components of a mechanical system or device, such as an internal combustion engine, to prevent leakage of combustion gases, cooling water, lubricating oil, or the like. Common applications involve placing a multi-layered gasket assembly between an engine block and a cylinder head and between an engine block and an exhaust manifold. Cylinder head gaskets typically extend around the cylinder bores of an engine to seal highpressure combustion gases within the cylinder bores as well as to seal oil and coolant passages. Exhaust manifold gaskets typically extend around the exhaust ports of an engine to seal high temperature exhaust gases flowing from the engine to an exhaust system. Once installed, the multi-layered gasket assembly bears the load from a bolted connection of the engine components and relies upon this load to provide an adequate seal therebetween.

Many of today's internal combustion engines utilize sleeves, also known as cylinder liners, which are inserted into the cylinder bores of the engine block. The sleeves are generally cylindrical in shape and are disposed in the cylinder bore between the engine block and piston. Often, the sleeves are made of a different metal or alloy than that used for the engine block. For example, an internal combustion engine may have an engine block that is made of aluminum and sleeves made of steel or cast iron. These metals have different rates of thermal expansion, which may cause the sleeve to expand and contract axially with respect to the cylinder bore. For example, if the sleeve is subject to high temperatures, it may expand axially and crush the gasket assembly, which could permanently deform it. Such a permanent deformation of the gasket assembly is problematic because some of the resiliency of the gasket assembly may be lost, thereby compromising the gasket's sealing capabilities. Then, as the sleeve is subjected to lower temperatures, it may contract axially and leave a gap between the sleeve and the deformed gasket assembly causing a small combustion gas leak.

Such multi-layered gasket assemblies typically include at least one gasket layer having an inboard edge circumscribing at least one aperture. The gasket layer also has an outboard region radially spaced from the aperture. In cylinder head gasket applications, the aperture typically corresponds with cylinder bores of the internal combustion engine. Alternatively, in exhaust manifold gasket applications, the aperture typically corresponds with exhaust ports of the internal combustion engine. The at least one gasket layer may be a plurality of gasket layers stacked in relation to one another. The gasket layers often include sealing beads disposed between the inboard edge and the outboard region to increase the sealing capability of the gasket assembly. Typically, the sealing beads extend annularly about each aperture. The sealing beads may include a primary sealing bead extending circumferentially about the aperture and radially along a first radial length. The sealing beads may further include a secondary sealing bead disposed along the gasket layer between the primary sealing bead and the inboard edge wherein the secondary sealing bead extends along a second radial length.

Some multi-layered gaskets also include a stopper layer disposed between the gasket layers. For example, one known multi-layered gasket includes a stopper layer that extends from the second sealing bead to the inboard edge and entirely overlaps the second radial length of the second sealing bead. In another known multi-layer gasket, the stopper layer extends from the outboard region of the gasket layer and terminates along second radial length of the second sealing bead to entirely overlap the first radial length of the primary sealing feature and partially overlap the second radial length of the secondary sealing feature. However, such stopper layers may not provide adequate protection to the multi-layered gasket to resist permanent deformation from expansion and contraction of the cylinder bore sleeve during thermal loading.

JP 2009062934 A and WO 2010/151616 A2 each discloses a gasket assembly according to the preamble of claim 1. US 5690343 A discloses a gasket having beads formed on an intermediate plate that prevent a full compression of bead plates.

### SUMMARY OF THE INVENTION

According to the invention a gasket assembly according to claim 1 is provided. Dependent claims relate to preferred embodiments.

The gasket assembly includes at least one gasket layer having an inboard edge circumscribing at least one aperture and an outboard region radially spaced from the aperture. At least one primary sealing bead is disposed along the gasket layer between the inboard edge and the outboard region. The primary sealing bead extends circumferentially about the aperture and radially along a first radial length. At least one secondary sealing bead is disposed along the gasket layer between the primary sealing bead and the inboard edge wherein the secondary sealing bead extends along a second radial length. A stopper layer is disposed adjacent at least a portion of the gasket layer. The stopper layer extends radially from the outboard region to the inboard edge of the gasket layer. Accordingly, the stopper layer entirely overlaps the first radial length of the primary sealing bead and the second radial length of the secondary sealing bead for providing increased gasket resiliency adjacent the inboard edge of the gasket layer.

Such a gasket assembly is advantageous in that the stopper layer extends from the outboard region to the inboard region and overlaps the entire radial lengths of both the primary and secondary sealing beads. This specific structure produces a gasket assembly that is more resilient and better able to cope with the expansion and contraction of the sleeve as it undergoes thermal loading. More specifically, by overlapping both beads, the compressive force exerted on the gasket assembly by the expanding sleeve is distributed over the entire radial length of both sealing beads. This prevents the sleeve from crushing or permanently deforming one of the sealing beads as it expands under high temperatures. Since the resiliency of the gasket assembly adjacent the inboard edge is preserved, no gap between the sleeve and the gasket assembly is created and the small gas leak is eliminated.

### BRIEF DESCRIPTION OF THE DRAWINGS

These and other advantages and features of the present invention will be readily appreciated, as the same becomes better understood by reference to the following detailed description when considered in connection with the accompanying drawings wherein:
Figure 1A is a fragmentary cross sectional view of an exemplary multi-layered gasket assembly;
Figure 1B is an exploded fragmentary cross sectional view of an exemplary secondary sealing bead of the multi-layered gasket assembly;
Figure 1C is a fragmentary cross sectional view of an exemplary multi-layered gasket assembly;
Figure 2A is a fragmentary cross sectional view of an exemplary multi-layered gasket assembly;
Figure 2B is a fragmentary cross sectional view of an exemplary multi-layered gasket assembly;
Figure 2C is a fragmentary cross sectional view of an exemplary multi-layered gasket assembly;
Figure 2D is a fragmentary cross sectional view of an exemplary multi-layered gasket assembly;
Figure 3 is a fragmentary cross sectional view of an exemplary multi-layered gasket assembly disposed between an exemplary cylinder head and engine block;
Figure 4A is a fragmentary cross sectional view of a prior art multi-layered gasket assembly disposed between an exemplary cylinder head and engine block wherein the sleeve has expanded axially crushing and permanently deforming the secondary sealing bead;
Figure 4B is a fragmentary cross sectional view of a prior art multi-layered gasket assembly disposed between an exemplary cylinder head and engine block wherein the sleeve has contracted axially showing the crushed and permanently deformed secondary sealing bead;
Figure 5A is a fragmentary cross sectional view of an exemplary multi-layered gasket assembly disposed between an exemplary cylinder head and engine block wherein the sleeve has expanded axially compressing the secondary sealing bead against the stopper layer;
Figure 5B is a fragmentary cross sectional view of an exemplary multi-layered gasket assembly disposed between an exemplary cylinder head and engine block wherein the sleeve has contracted axially and the secondary sealing bead has returned to an uncompressed state;
Figure 6 is a fragmentary top elevational view of an exemplary multi-layered gasket assembly highlighting axially aligned bridge portions.

### DESCRIPTION OF THE ENABLING EMBODIMENT

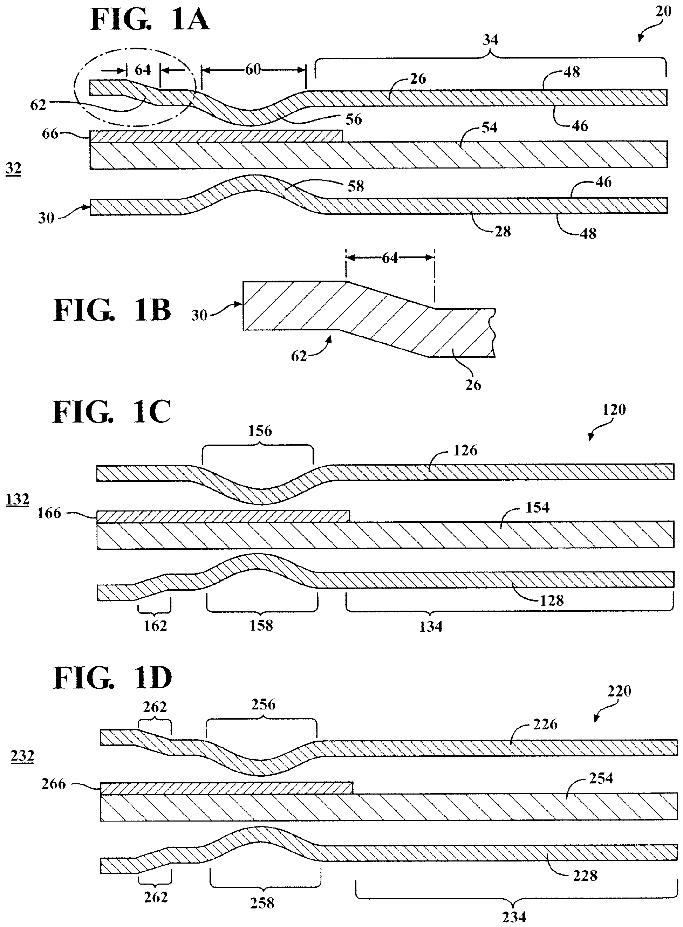

Referring in more detail to the drawings, Figure 1A illustrates a multi-layer steel gasket assembly **20** for providing sealing between an engine block **22** and a cylinder head **24** of an internal combustion engine. The gasket assembly **20** includes at least one gasket layer **26, 28** having an inboard edge **30** circumscribing at least one aperture **32** and an outboard region **34** radially spaced from the aperture **32**. The at least one gasket layer **26, 28** may include a plurality of metal gasket layers **26, 28** stacked in relation to one another. Accordingly, the metal gasket layers **26, 28** are axially aligned and generally co-extensive with one another. Each of the gasket layers **26, 28** presents an inner face **46** and an outer face **48** opposite the inner face **46**. The gasket assembly **20** could include any number of gasket layers **26, 28**. Where the gasket assembly **20** has two gasket layers **26, 28** including a first gasket layer **26** and a second gasket layer **28**, the inner faces **46** of the first and second gasket layers **26, 28** face one another. The gasket assembly **20** may further include an intermediary layer **54** co-extensive with and disposed between two of the gasket layers **26, 28**. Accordingly, the intermediary layer **54** may be sandwiched between at least two of the gasket layers **26, 28**. It should be appreciated that the intermediary layer **54** of the gasket assembly **20** may be attached to one or more of the gasket layers **26, 28**. A variety of attachment means can be used including but not limited to the use of adhesives, fasteners, welding, and crimping.

Still referring to Figure 1A, the gasket assembly **20** further includes at least one primary sealing bead **56, 58** disposed along the gasket layer **26, 28** between the inboard edge **30** and the outboard region **34**. The primary sealing bead **56, 58** may take a variety of different shapes and may extend in several directions. The gasket assembly **20** illustrated in Figure 1A is constructed such that the primary sealing bead **56, 58** is formed in each of the first and second gasket layers **26, 28** and protrudes inwardly towards the intermediary layer **54**. The primary sealing bead **56, 58** extends circumferentially about the aperture **32** and radially along a first radial length **60**. The first radial length **60** corresponds to a maximum radial length as measured between the two most radially distant points of the structure forming the primary sealing bead **56, 58**. For example, where the primary sealing bead **56, 58** has a cross-section generally approximating a U-shaped curve, the first radial length **60** would extend between the two crests of the U-shaped curve.

The primary sealing bead **56, 58** is spaced from the inboard edge **30** of the gasket layer **26, 28** and may completely enclose and surround the aperture **32**. Additionally, the primary sealing bead **56, 58** may be formed by the features of one or more of the gasket layers **26, 28**. The gasket assembly **20** also includes at least one secondary sealing bead **62** disposed along at least one of the gasket layers **26, 28** between the primary sealing bead **56, 58** and the inboard edge **30**. Accordingly, the secondary sealing bead **62** may be radially inward of and circumscribed by the primary sealing bead **56, 58**. The secondary sealing bead **62** extends radially along a second radial length **64** corresponding to a maximum radial length as measured between the two most radially distant points of the structure forming the secondary sealing bead **62.** The secondary sealing bead **62** may take a variety of different shapes and may extend in several directions. The gasket assembly **20** illustrated in Figure 1A is constructed such that secondary sealing bead **62** is formed in the first gasket layer **26** and protrudes outwardly away from the intermediary layer **54**.

The gasket assembly **20** further includes a stopper layer **66** adjacent at least a portion of the gasket layer **26, 28**. For example, the stopper layer **66** may be disposed between one of the gasket layers **26, 28** and the intermediary layer **54** or between two gasket layers **26, 28** where the intermediary layer **54** is absent. The stopper layer **66** extends radially from the outboard region **34** to the inboard edge **30** and entirely overlaps the first radial length **60** of the primary sealing bead **56, 58** and the second radial length **64** of the secondary sealing bead **62**.

Referring to Figure 1B, the secondary sealing bead **62** may include a bend generally following an ogee curve. As the term is understood in geometry, an ogee curve is shaped somewhat like the letter S and approximates the tangent function. Accordingly, an ogee curve has a pair of oppositely curving arcs each extending from a common tangent point and terminating at a pair of parallel ends. Where the secondary sealing bead **62** follows the form of an ogee curve, the second radial length **64** may be measured between the parallel ends.

In Figure 1C, a gasket assembly **120** constructed in accordance with another aspect of the invention is shown, wherein the same reference numerals, offset by a factor of 100, are used to identify similar features as discussed above. The gasket assembly **120** has two gasket layers **126, 128** each including at least one primary sealing bead **156, 158**. A first primary sealing bead **156** protrudes inwardly from the first gasket layer **126** towards the intermediary layer **154**. A second primary sealing bead **158** radially aligned with the first primary sealing bead **156** protrudes inwardly from the second gasket layer **128** towards the intermediary layer **154.** A stopper layer **166** is disposed between the first gasket layer **126** and the intermediary layer **154** and extends radially from the aperture **132** to the outboard region **134** of the gasket layers **126, 128**. According to this aspect of the invention, a secondary sealing bead **162** protrudes from the second gasket layer **128** wherein the bend of the secondary sealing bead **162** generally opens outwardly away from the intermediary layer **154.**

In Figure 1D, a gasket assembly **220** constructed in accordance with another aspect of the invention is shown, wherein the same reference numerals, offset by a factor of 200, are used to identify similar features as discussed above. The gasket assembly **220** has two gasket layers **226, 228** each including at least one primary sealing bead **256, 258**. A first primary sealing bead **256** protrudes inwardly from the first gasket layer **226** towards the intermediary layer **254**. A second primary sealing bead **258** radially aligned with the first primary sealing bead **256** protrudes inwardly from the second gasket layer **228** towards the intermediary layer **254**. A stopper layer **266** is disposed between the first gasket layer **226** and the intermediary layer **254** and extends radially from the aperture **232** to the outboard region **234** of the gasket layers **226, 228**. According to this aspect of the invention, a secondary sealing bead **262** protrudes from both the first gasket layer **226** and the second gasket layer **228** wherein the bend of each secondary sealing bead **262** generally opens outwardly away from the intermediary layer **254**.

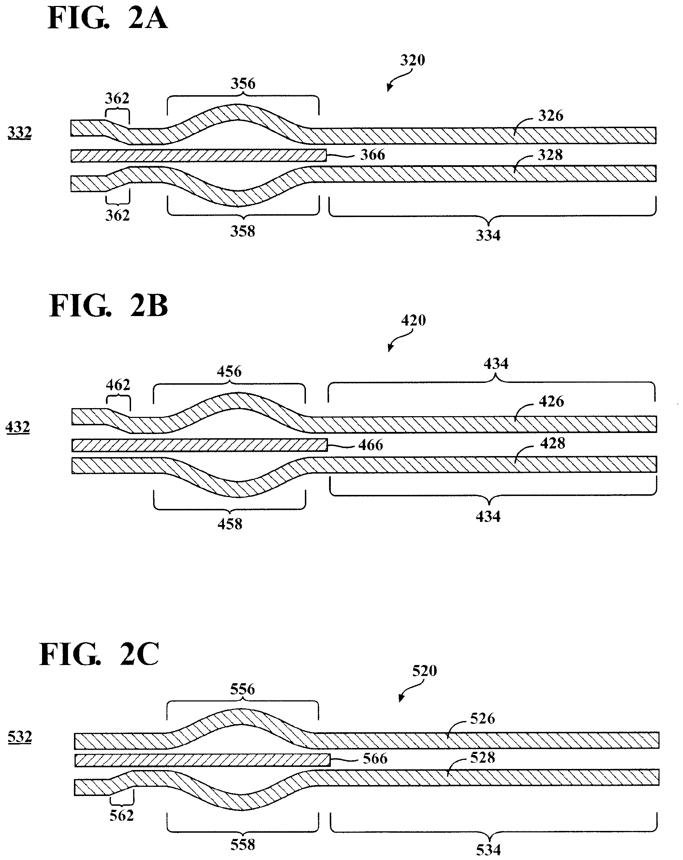

In Figure 2A, a gasket assembly **320** constructed in accordance with another aspect of the invention is shown, wherein the same reference numerals, offset by a factor of 300, are used to identify similar features as discussed above. The gasket assembly **320** has two gasket layers **326, 328** each including at least one primary sealing bead **356, 358**. A stopper layer **366** is disposed between the first gasket layer **326** and the second gasket layer **328** and extends radially from the aperture **332** to the outboard region **334** of the gasket layers **326, 328**. A first primary sealing bead **356** protrudes outwardly from the first gasket layer **326** away from the stopper layer **366**. A second primary sealing bead **358** radially aligned with the first primary sealing bead **356** protrudes outwardly from the second gasket layer **328** away from the stopper layer **366**. According to this aspect of the invention, a secondary sealing bead **362** protrudes from both the first gasket layer **326** and the second gasket layer **328** wherein the bend of each secondary sealing bead **362** generally opens outwardly away from the stopper layer **366**.

In Figure 2B, a gasket assembly **420** constructed in accordance with another aspect of the invention is shown, wherein the same reference numerals, offset by a factor of 400, are used to identify similar features as discussed above. The gasket assembly **420** has two gasket layers **426, 428** each including at least one primary sealing bead **456, 458**. A stopper layer **466** is disposed between the first gasket layer **426** and the second gasket layer **428** and extends radially from the aperture **432** to the outboard region **434** of the gasket layers **426, 428**. A first primary sealing bead **456** protrudes outwardly from the first gasket layer **426** away from the stopper layer **466**. A second primary sealing bead **458** radially aligned with the first primary sealing bead **456** protrudes outwardly from the second gasket layer **428** away from the stopper layer **466**. According to this aspect of the invention, a secondary sealing bead **462** protrudes from the first gasket layer **426** wherein the bend of the secondary sealing bead **462** generally opens outwardly away from the stopper layer **466**.

In Figure 2C, a gasket assembly **520** constructed in accordance with another aspect of the invention is shown, wherein the same reference numerals, offset by a factor of 500, are used to identify similar features as discussed above. The gasket assembly **520** has two gasket layers **526, 528** each including at least one primary sealing bead **556, 558**. A stopper layer **566** is disposed between the first gasket layer **526** and the second gasket layer **528** and extends radially from the aperture **532** to the outboard region **534** of the gasket layers **526, 528**. A first primary sealing bead **556** protrudes outwardly from the first gasket layer **526** away from the stopper layer **566**. A second primary sealing bead **558** radially aligned with the first primary sealing bead **556** protrudes outwardly from the second gasket layer **528** away from the stopper layer **566**. According to this aspect of the invention, a secondary sealing bead **562** protrudes from the second gasket layer **528** wherein the bend of the secondary sealing bead **562** generally opens outwardly away from the stopper layer **566**.

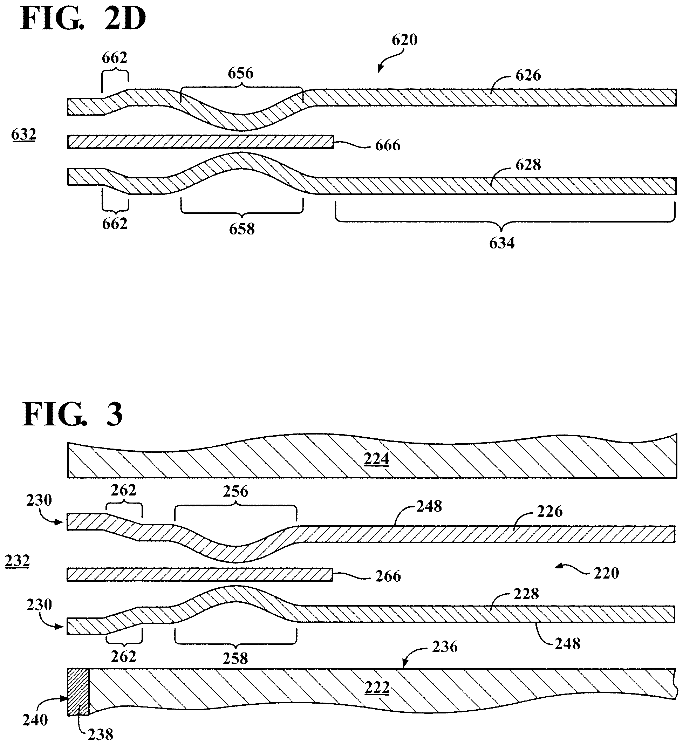

In Figure 2D, a gasket assembly **620** constructed in accordance with another aspect of the invention is shown, wherein the same reference numerals, offset by a factor of 600, are used to identify similar features as discussed above. The gasket assembly **620** has two gasket layers **626, 628** each including at least one primary sealing bead **656, 658**. A stopper layer **666** is disposed between the first gasket layer 626 and the second gasket layer **628** and extends radially from the aperture **632** to the outboard region **634** of the gasket layers **626, 628**. A first primary sealing bead **656** protrudes inwardly from the first gasket layer **626** towards the stopper layer **666**. A second primary sealing bead **658** radially aligned with the first primary sealing bead **656** protrudes inwardly from the second gasket layer **628** towards the stopper layer **666**. According to this aspect of the invention, a secondary sealing bead **662** protrudes from both the first gasket layer **626** and the second gasket layer **628** wherein the bend of each secondary sealing bead **662** generally opens inwardly towards the stopper layer **666**.

Referring to Figure 3, the gasket assembly **220** constructed in accordance with the arrangement depicted in Figure 1D is shown as it is being installed in an internal combustion engine. It should be appreciated that the aperture **232** generally corresponds to areas overlapping the placement of cylinder bores in the internal combustion engine but may also correspond to areas overlapping exhaust ports, cooling channels, threaded bores for receiving fasteners, and other voids in the cylinder head **224** and/or engine block **222**. The engine block **222** may further include a deck surface **236** adjacent the cylinder head **224** and at least one sleeve **238** disposed in the cylinder forming an inner cylinder wall **240**. In accordance with this configuration, the inboard edge **230** of the gasket layers **226, 228** are radially aligned with the inner cylinder wall **240** formed by the sleeve **238**. The outer face **248** of the first gasket layer **226** mates with the cylinder head **224** of the internal combustion engine and the outer face **248** of the second gasket layer **228** mates with the engine block **222** of the internal combustion engine. More specifically, the outer face **248** of the second gasket layer **228** may mate with the deck surface **236** of the engine block **222**.

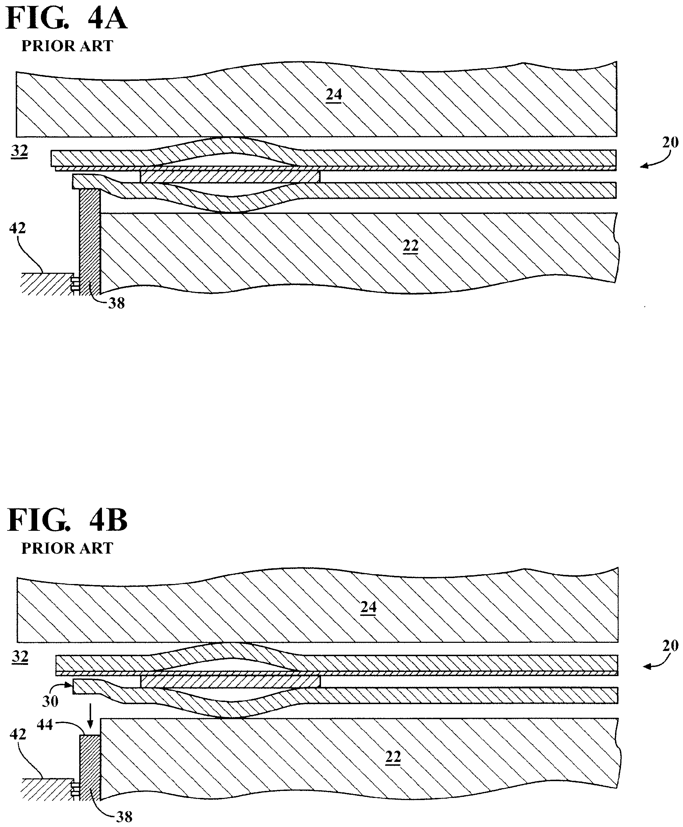

Referring to Figures 4A and 4B, a prior art gasket assembly **20** is shown. In the typical internal combustion engine that utilizes sleeves **38** to shield the cylinders from direct contact with the pistons **42**, the thermal cycling of the internal combustion engine causes the sleeve **38** to expand and contract in the axial direction relative to the engine block **22**. This is especially true where the sleeve **38** is made of a different metal than the material forming the engine block **22** as different metals have different thermal expansion properties (e.g. aluminum and steel). The expansion of the sleeve **38** can crush prior art gasket assemblies **20** thereby permanently deforming such assemblies **20**. Permanent deformation of the gasket assembly **20** is problematic because some of the resiliency of the gasket assembly **20** is lost resulting in poorer sealing capability. As shown in Figure 4B, when the sleeve **38** is subject to lower temperatures the sleeve **38** may contract axially such that the exposed end **44** recedes into the cylinder bore leaving a gap between the exposed end **44** of the sleeve **38** and the gasket assembly **20** causing a small combustion gas leak.

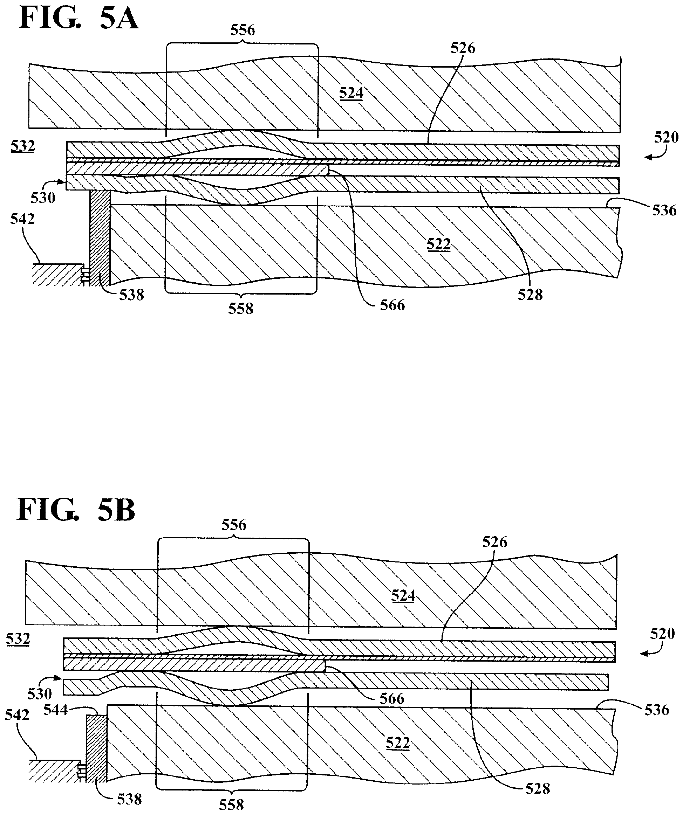

Referring to Figures 5A and 5B, the gasket assembly **520** constructed in accordance with the arrangement depicted in Figure 2C is shown as it interacts with the expanding and contracting sleeve **538** of an exemplary internal combustion engine. The specific structure disclosed herein produces a gasket assembly **520** that is better able to cope with the expansion and contraction of the sleeve **538** as it undergoes thermal loading. More specifically, by placing the stopper layer in overlapping relationship with both the primary sealing bead **556, 558** and the secondary sealing bead **562,** the compressive force exerted on the gasket assembly **520** by the expanding sleeve **538** is distributed over the entire radial length of both sealing beads **556, 558, 562**.

As illustrated in Figures 5A and 5B, the at least one sleeve **538** is generally cylindrical in shape and is disposed in the cylinder bore between the engine block **522** and piston **542**. The sleeve **538** may be made of a different metal or alloy than that used for the engine block **522**. For example, the engine block **522** may be made of aluminum and sleeves **538** may be made of steel or cast iron. As previously noted, these metals have different rates of thermal expansion. As shown in Figures 5A and 5B, a condition may occur during the operation of the engine where the sleeve **538** undergoes thermal loading and expands and contracts axially with respect to the cylinder bore. It should be appreciated that the sleeve **538** is constrained in the cylinder bore such that any expansion or contraction is limited to axial travel of an exposed end **544** of the sleeve **538** adjacent the deck surface **536** of the cylinder block. For example, as the sleeve **538** is subject to high temperatures, the sleeve **538** may expand axially such that the exposed end **544** protrudes from the deck surface **536** of the engine block **522**.

As shown in Figure 5A, the specific placement of the stopper layer **566** relative to the sealing beads **556, 558, 562** prevents the sleeve **538** from crushing or permanently deforming one of the sealing beads **556, 558, 562** as the sleeve **538** expands under high temperatures. As shown in Figure 5B, the resiliency of the gasket assembly **520** adjacent the inboard edge **530** is preserved and the secondary sealing bead **562** will return to an uncompressed state when the sleeve **538** retracts due to cooler operating temperature. Accordingly, no gap between the sleeve **538** and the gasket assembly **520** is created and the small gas leak is eliminated. Thus, the stopper layer **566** provides increased gasket resiliency and performance adjacent the inboard edge **530** of the gasket layer **526, 528**.

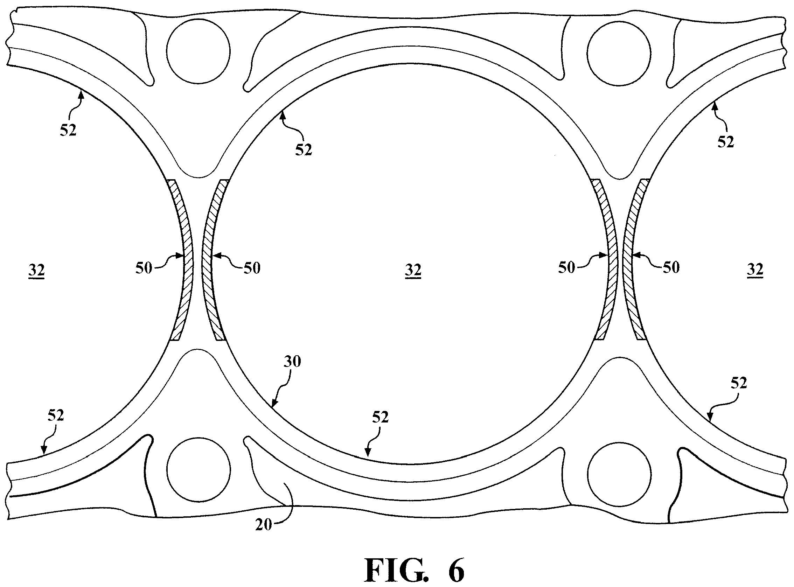

Referring to Figures 6, the inboard edge **30** of the gasket assembly **20** may include a pair of axially aligned bridge portions **50** of limited circumferential extent spaced by side portions **52**. Together, the bridge portions **50** and the side portions **52** of the inboard edge **30** entirely circumscribe the aperture **32**. For example, looking down at the gasket assembly **20**, the aperture **32** may be bounded on the left and the right by the axially aligned bridge portions **50** and on the top and bottom by the side portions **52**. The at least one aperture **32** may also be a plurality of axially aligned apertures **32** spaced by adjacent bridge portions **50**. According to this configuration, the bridge portions **50** are disposed between adjacent apertures **32**. The gasket assembly **20** is typically subject to greater heat and pressure at the bridge portions **50** and that these elevated operational characteristics often lead to sealing problems and gasket failure in the area of the bridge portions **50**. Moreover, the spacing between adjacent sleeves **38** in the bridge portion **50** is small such that any unevenness in the deck surface **36** caused by thermal loading of the sleeves **38** is exaggerated at the bridge portions **50**. Accordingly, the need for a gasket assembly **20** having greater sealing capability is elevated at the bridge portions **50**. The secondary sealing bead **62** may extend circumferentially about and enclose the aperture **32**. Alternatively, the secondary sealing bead **62** may have a limited circumferential extent extending along only the axially aligned bridge portions **50** of the gasket assembly **20**. As seen in Figure 6, the aperture **32** may appear to be flanked on either side by bridge portions **50** each featuring the secondary sealing bead **62** wherein the limited circumferential extend of the secondary sealing bead **62** is co-extensive with the bridge portions **50** and is equal to only a fraction of the circumferential extent of the inboard edge **30**.

Obviously, many modifications and variations of the present invention are possible in light of the above teachings and may be practiced otherwise than as specifically described while within the scope of the appended claims. These antecedent recitations should be interpreted to cover any combination in which the inventive novelty exercises its utility. The use of the word "said" in the apparatus claims refers to an antecedent that is a positive recitation meant to be included in the coverage of the claims whereas the word "the" precedes a word not meant to be included in the coverage of the claims. In addition, the reference numerals in the claims are merely for convenience and are not to be read in any way as limiting.

## Claims

1. A gasket assembly (20) comprising;
at least one gasket layer (26) having an inboard edge (30) circumscribing at least one aperture (32) and an outboard region (34) radially spaced from said aperture, wherein said at least one aperture (32) is a plurality of axially aligned apertures (32) spaced by adjacent bridge portions (52) disposed between adjacent apertures,
at least one primary sealing bead (56) disposed along said gasket layer (26) between said inboard edge and said outboard region wherein said primary sealing bead (56) extends circumferentially about said aperture (32) and radially along a first radial length (60),
at least one secondary sealing bead (62) disposed along said gasket layer (26) between said primary sealing bead (56) and said inboard edge wherein said secondary sealing bead (62) extends along a second radial length (64),
said at least one secondary sealing bead (62) includes a bend generally following an ogee curve terminating at said inboard edge, said ogee curve having a pair of oppositely curving arcs each extending from a common tangent point and terminating at a pair of parallel ends, and **characterized in that**
a stopper layer (66) adjacent at least a portion of said gasket layer (26) is provided, said stopper layer (66) having substantially flat opposite sides and extending radially from said outboard region to said inboard edge of said gasket layer (26) to entirely overlap said first radial length (60) of said primary sealing bead (56) and said second radial length (64) of said secondary sealing bead (62) for providing increased gasket resiliency adjacent said inboard edge of said gasket layer, and
said at least one secondary sealing bead (62) has a limited circumferential extent extending along only the axially aligned bridge portions (52), such that the limited circumferential extend of the at least one secondary sealing bead (62) is co-extensive with said bridge portions (52) and is equal to only a fraction of the circumferential extent of said inboard edge.

2. The assembly as set forth in claim 1, wherein said at least one gasket layer (26) includes a plurality of metal gasket layers (26, 28) stacked in relation to one another.

3. The assembly as set forth in claim 2, further comprising an intermediary layer (54) co-extensive with and disposed between two of said gasket layers (26, 28).

4. The assembly as set forth in claim 3, wherein said ogee curve opens outwardly away from said intermediary layer.

5. The assembly as set forth in claim 3, wherein said ogee curve opens inwardly towards said intermediary layer.

6. The assembly as set forth in claim 4, wherein said stopper layer is disposed between one of said gasket layers and said intermediary layer.

7. The assembly as set forth in claim 1, wherein said at least one primary sealing bead includes a first primary sealing bead protruding inwardly towards said intermediary layer and a second primary sealing bead radially aligned with said first primary sealing bead and protruding inwardly towards said intermediary layer.

8. The assembly as set forth in claim 1, wherein said at least one primary sealing bead includes a first primary sealing bead protruding outwardly away from said intermediary layer and a second primary sealing bead radially aligned with said first primary sealing bead and protruding outwardly away from said intermediary layer.

9. The assembly as set forth in claim 7, wherein each of said gasket layers present an inner face facing said intermediary layer and an outer face opposite said inner face.

10. The assembly as set forth in claim 9, wherein said outer face of one of said gasket layers mates with a cylinder head and said outer face of another one of said gasket layers mates with an engine block.

## Patentansprüche

1. Dichtungsanordnung (20), umfassend:
mindestens eine Dichtungsschicht (26), die einen nach innen gerichteten Rand (30), der mindestens eine Öffnung (32) umschreibt, und eine nach außen gerichtete Region (34), die von der Öffnung radial beabstandet ist, aufweist, wobei die mindestens eine Öffnung (32) einer Vielzahl von axial ausgerichteten Öffnungen (32) entspricht, die durch angrenzende Brückenabschnitte (52) beabstandet sind, die zwischen angrenzenden Öffnungen angeordnet sind,
mindestens eine primäre Dichtwulst (56), die entlang der Dichtungsschicht (26) zwischen dem nach innen gerichteten Rand und der nach außen gerichteten Region angeordnet ist, wobei sich die primäre Dichtwulst (56) umfangsmäßig um die Öffnung (32) herum und radial entlang einer ersten radialen Länge (60) erstreckt,
mindestens eine sekundäre Dichtwulst (62), die entlang der Dichtungsschicht (26) zwischen der primären Dichtwulst (56) und dem nach innen gerichteten Rand angeordnet ist, wobei sich die sekundäre Dichtwulst (62) entlang einer zweiten radialen Länge (64) erstreckt,
wobei die mindestens eine sekundäre Dichtwulst (62) eine Biegung umfasst, die im Allgemeinen einer S-Kurve folgt, die an dem nach innen gerichteten Rand endet, wobei die S-Kurve ein Paar von entgegengesetzt gekrümmten Bögen aufweist, die sich jeweils von einem gemeinsamen Berührungspunkt aus erstrecken und an einem Paar von parallelen Endpunkten enden, und
**dadurch gekennzeichnet, dass**
eine Sperrschicht (66) neben mindestens einem Abschnitt der Dichtungsschicht (26) bereitgestellt wird, wobei die Sperrschicht (66) im Wesentlichen flache gegenüberliegende Seiten aufweist und sich radial von der nach außen gerichteten Region zu dem nach innen gerichteten Rand der Dichtungsschicht (26) erstreckt, um die erste radiale Länge (60) der primären Dichtwulst (56) und die zweite radiale Länge (64) der sekundären Dichtwulst (62) ganz zu überlappen, um eine erhöhte Dichtungsfederkraft neben dem nach innen gerichteten Rand der Dichtungsschicht bereitzustellen, und
die mindestens eine sekundäre Dichtwulst (62) eine begrenzte Umfangserstreckung aufweist, die sich nur entlang der axial ausgerichteten Brückenabschnitte (52) erstreckt, so dass die begrenzte Umfangserstreckung der mindestens einen sekundären Dichtwulst (62) die gleiche Ausdehnung wie die Brückenabschnitte (52) aufweist und nur gleichen einem Bruchteil der Umfangserstreckung des nach innen gerichteten Randes ist.

2. Anordnung nach Anspruch 1, wobei die mindestens eine Dichtungsschicht (26) eine Vielzahl von metallischen Dichtungsschichten (26, 28) umfasst, die im Verhältnis zueinander gestapelt sind.

3. Anordnung nach Anspruch 2, ferner umfassend eine Zwischenschicht (54), welche die gleiche Ausdehnung wie zwei der Dichtungsschichten (26, 28) aufweist und dazwischen angeordnet ist.

4. Anordnung nach Anspruch 3, wobei die S-Kurve von der Zwischenschicht aus nach außen offen ist.

5. Anordnung nach Anspruch 3, wobei die S-Kurve in Richtung auf die Zwischenschicht nach innen offen ist.

6. Anordnung nach Anspruch 4, wobei die Sperrschicht zwischen einer der Dichtungsschichten und der Zwischenschicht angeordnet ist.

7. Anordnung nach Anspruch 1, wobei die mindestens eine primäre Dichtwulst eine erste primäre Dichtwulst, die in Richtung auf die Zwischenschicht nach innen vorsteht, und eine zweite primäre Dichtwulst, die auf die erste primäre Dichtwulst radial ausgerichtet ist und in Richtung auf die Zwischenschicht nach innen vorsteht, umfasst.

8. Anordnung nach Anspruch 1, wobei die mindestens eine primäre Dichtwulst eine erste primäre Dichtwulst, die von der Zwischenschicht aus nach außen vorsteht, und eine zweite primäre Dichtwulst, die auf die erste primäre Dichtwulst radial ausgerichtet ist und von der Zwischenschicht aus nach außen vorsteht, umfasst.

9. Anordnung nach Anspruch 7, wobei jede der Dichtungsschichten eine innere Seite, die der Zwischenschicht zugewandt ist, und eine äußere Seite gegenüber der inneren Seite aufweist.

10. Anordnung nach Anspruch 9, wobei die äußere Seite einer der Dichtungsschichten zu einem Zylinderkopf passt und die äußere Seite einer anderen der Dichtungsschichten zu einem Motorblock passt.

## Revendications

1. Ensemble joint d'étanchéité (20) comprenant :
au moins une couche de joint d'étanchéité (26) ayant un bord intérieur (30) entourant au moins une ouverture (32) et une région extérieure (34) espacée radialement de ladite ouverture, ladite au moins une ouverture (32) étant une pluralité d'ouvertures alignées axialement (32) espacées par des parties ponts adjacentes (52) disposées entre des ouvertures adjacentes,
au moins un bourrelet d'étanchéité principal (56) disposé le long de ladite couche de joint d'étanchéité (26) entre ledit bord intérieur et ladite région extérieure, ledit bourrelet d'étanchéité principal (56) s'étendant de manière circonférentielle autour de ladite ouverture (32) et radialement le long d'une première longueur radiale (60),
au moins un bourrelet d'étanchéité secondaire (62) disposé le long de ladite couche de joint d'étanchéité (26) entre ledit bourrelet d'étanchéité principal (56) et ledit bord intérieur, ledit bourrelet d'étanchéité secondaire (62) s'étendant le long d'une seconde longueur radiale (64),
ledit au moins un bourrelet d'étanchéité secondaire (62) comprend une courbure suivant généralement une courbe en accolade se terminant au niveau dudit bord intérieur, ladite courbe en accolade ayant une paire d'arcs à courbure opposée s'étendant chacun à partir d'un point tangent commun et se terminant au niveau d'une paire d'extrémités parallèles, et **caractérisé par le fait que**
une couche d'arrêt (66) adjacente à au moins une partie de ladite couche de joint d'étanchéité (26) est prévue, ladite couche d'arrêt (66) ayant des côtés opposés sensiblement plats et s'étendant radialement de ladite région extérieure audit bord intérieur de ladite couche de joint d'étanchéité (26) pour chevaucher entièrement ladite première longueur radiale (60) dudit bourrelet d'étanchéité principal (56) et ladite seconde longueur radiale (64) dudit bourrelet d'étanchéité secondaire (62) afin de fournir une élasticité de joint d'étanchéité accrue adjacente audit bord intérieur de ladite couche de joint d'étanchéité, et
ledit au moins un bourrelet d'étanchéité secondaire (62) a une étendue circonférentielle limitée s'étendant uniquement le long des parties ponts alignées axialement (52), de telle sorte que l'étendue circonférentielle limitée de l'au moins un bourrelet d'étanchéité secondaire (62) est coextensive avec lesdites parties ponts (52) et est égale à uniquement une fraction de l'étendue circonférentielle dudit bord intérieur.

2. Ensemble selon la revendication 1, dans lequel ladite au moins une couche de joint d'étanchéité (26) comprend une pluralité de couches de joint d'étanchéité métalliques (26, 28) empilées les unes par rapport aux autres.

3. Ensemble selon la revendication 2, comprenant en outre une couche intermédiaire (54) coextensive avec et disposée entre deux desdites couches de joint d'étanchéité (26, 28).

4. Ensemble selon la revendication 3, dans lequel ladite courbe en accolade s'ouvre vers l'extérieur à l'opposé de ladite couche intermédiaire.

5. Ensemble selon la revendication 3, dans lequel ladite courbe en accolade s'ouvre vers l'intérieur en direction de ladite couche intermédiaire.

6. Ensemble selon la revendication 4, dans lequel ladite couche d'arrêt est disposée entre une desdites couches de joint d'étanchéité et ladite couche intermédiaire.

7. Ensemble selon la revendication 1, dans lequel ledit au moins un bourrelet d'étanchéité principal comprend un premier bourrelet d'étanchéité principal faisant saillie vers l'intérieur en direction de ladite couche intermédiaire et un second bourrelet d'étanchéité principal aligné radialement avec ledit premier bourrelet d'étanchéité principal et faisant saillie vers l'intérieur en direction de ladite couche intermédiaire.

8. Ensemble selon la revendication 1, dans lequel ledit au moins un bourrelet d'étanchéité principal comprend un premier bourrelet d'étanchéité principal faisant saillie vers l'extérieur à l'opposé de ladite couche intermédiaire et un second bourrelet d'étanchéité principal aligné radialement avec ledit premier bourrelet d'étanchéité principal et faisant saillie vers l'extérieur à l'opposé de ladite couche intermédiaire.

9. Ensemble selon la revendication 7, dans lequel chacune desdites couches de joint d'étanchéité présente une face interne faisant face à ladite couche intermédiaire et une face externe opposée à ladite face interne.

10. Ensemble selon la revendication 9, dans lequel ladite face externe de l'une desdites couches de joint d'étanchéité s'accouple avec une culasse et ladite face externe d'une autres desdites couches de joint d'étanchéité s'accouple avec un bloc-moteur.
